# EUROPÄISCHE PATENTSCHRIFT

(11) **EP 1 269 823 B1**
(45) Veröffentlichungstag und Bekanntmachung des Hinweises auf die Patenterteilung: **23.11.2005**
(21) Anmeldenummer: 02013853.3
(22) Anmeldetag: 22.06.2002
(51) Int. Cl.: A01D 41/14

(54) **System zur Verstellung eines Erntevorsatzes einer Erntemaschine**
System for adjusting the header of a harvesting machine
Système de réglage d'une tête de récolte d'une machine de récolte

(30) Priorität: 28.06.2001 US 894040
(43) Veröffentlichungstag der Anmeldung: 02.01.2003
(73) Patentinhaber: DEERE & COMPANY, Moline, Illinois 61265-8098 (US)
(72) Erfinder: Beck, Folker, Dr., Bettendorf, IA 52722 (US); Coers, Bruce Alan, Hillsdale, IL 61257 (US)
(74) Vertreter: Holst, Sönke

(56) Entgegenhaltungen:
- EP-A- 0 786 200
- AU-A- 2 108 067
- FR-A- 2 022 798
- US-A- 4 507 910
- US-A- 4 594 840
- US-A- 4 776 153
- US-A- 5 155 984
- US-A- 5 911 669
- US-A1- 2002 011 056

## Beschreibung

Die Erfindung betrifft ein System zur Verstellung eines Erntevorsatzes einer Erntemaschine, mit einer zur Verstellung des Erntevorsatzes gegenüber der Erntemaschine eingerichteten Verstelleinrichtung, einer zur Ansteuerung der Verstelleinrichtung eingerichteten Steuerung und einem Sender und Empfänger, der Signale auf eine Fläche abstrahlt, die in Fahrtrichtung vor dem Erntevorsatz auf einem von der Erntemaschine zurückzulegenden Weg liegt, auf dem Erntegut vorhanden ist, und von der Fläche reflektierte Signale empfängt und der Steuerung anhand der empfangenen Signale ein Steuersignal zur Verstellung des Erntevorsatzes zuführt, wobei die Steuerung die Verstelleinrichtung anhand des Steuersignals derart ansteuert, dass der Erntevorsatz eine im Wesentlichen konstante Stellung gegenüber dem Erdboden einnimmt.

Eine selbstfahrende Erntemaschine, wie beispielsweise ein Mähdrescher, ist in der Regel mit einem Erntevorsatz versehen, um in einige quer beabstandete Reihen oder eine beträchtliche Breite stehenden Ernteguts einzugreifen. Um den Erntevorsatz zwecks effizienter Ernte und zur Vermeidung eines Eindringens des Erntevorsatzes in den Boden in der gewünschten Höhe über dem Erdboden oder unterhalb der Ähren des Ernteguts zu halten, wird ein automatisches Höhensteuerungssystem für den Erntevorsatz bereitgestellt, das typischerweise einen mechanischen Fühler oder einen akustischen Sensor oder ähnliche, kontaktlose Bodenfühleinrichtungen umfasst, die am Vorsatz befestigt sind. Beispiele bekannter Einrichtungen sind in der US 6 173 614 A, US 5 704 200 A, US 5 463 854 A, US 5 155 984 A und US 4 171 606 A dargestellt. Die US 4 776 153 zeigt ein Höhensteuerungssystem für einen Erntevorsatz mit einer Vielzahl an Fühlern und einer Neigungssteuerung.

Obwohl die verfügbaren Höhensteuerungssysteme in den meisten Situationen eine gute Positionssteuerung bereitstellen und den Bediener von der anstrengenden Aufgabe freistellen, die Höhe oder Neigung mit sich ändernden Boden- und Erntegutbedingungen einzustellen, bestehen bei den Systemen mehrere Probleme. Die Leistungsanforderungen an die Hydraulik und die Materialbeanspruchungen sind häufig hoch, wenn die Hubsysteme eine schnelle Reaktion ermöglichen. Die Systeme versagen oft, rechtzeitig zu reagieren, um ineffiziente Erntegutaufnahme, übermäßige Erntegutaufnahme oder Bodenberührung und Beschädigungen des Erntevorsatzes zu vermeiden. Die Antwortzeit des Systems ist ein Problem, wenn sich die Erntemaschine mit relativ hohen Geschwindigkeiten bewegt, wie beim Betrieb in Feldbedingungen mit niedriger Erntegutausbeute, und wenn die Erntemaschine auf Feldern arbeitet, die wesentliche Bodenkonturvariationen aufweisen. Die Neigungsantwortzeit ist bei hohen Geschwindigkeiten oder auf Feldern mit sehr unregelmäßigen Oberflächenkonturen häufig für Erntevorsätze mit automatischen Neigungssystemen, wie sie in der oben genannten US 4 776 153 A gezeigt werden, zu lang, um den Erntevorsatz im Wesentlichen parallel zum Erdboden zu halten. Bodenkontakte des Erntevorsatzes und Beschädigungen haben, wie auch ungünstige Betriebshöhen des Erntevorsatzes, verminderte Produktivität zur Folge. Wenn die Erntemaschine tiefe Vertiefungen, wie Täler, Bodenfalten und Rinnsale überquert, kann der Erntevorsatz Bodenberührung bekommen und beschädigt werden, bevor das Hubsystem auf den plötzlichen Anstieg in der Bodenoberfläche reagieren kann. Die Bodenberührung ist ein besonderes Problem, wenn die Vorderräder der Erntemaschine in einer Vertiefung sind und der Vorsatz in der Nähe eines angehobenen Oberflächenbereichs ist. Nahe der Kuppe eines Bergs oder hügeligen Fläche ist der Erntevorsatz häufig zu hoch und verfehlt das Erntegut, da das System nicht schnell auf die abrupten Änderungen der Bodenoberfläche reagieren kann.

In der EP 0 887 660 A wird vorgeschlagen, eine Laserabtasteinrichtung zur Ermittlung des Abstands einer Getreideährenoberfläche von einer Erntemaschine zu nutzen. Ihr Signal wird zur Regelung der Schneidwerks- bzw. Haspelhöhe verwendet. In welcher Weise das Signal genutzt wird, ist nicht näher offenbart.

Die der Erfindung zugrunde liegende Aufgabe wird darin gesehen, ein verbessertes Steuersystem für die Position eines Erntevorsatzes eines Mähdreschers oder anderer Erntemaschinen bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, dass der Sender und Empfänger eine beträchtlich weit vor dem Erntevorsatz liegende Fläche mit einem Signal beaufschlagt und anhand des reflektierten Signals - insbesondere dessen Laufzeit und/oder Amplitude - eine Information über die Höhe der beaufschlagten Fläche gewinnt. Dadurch wird noch vor der Ankunft des Erntevorsatzes (und an ihm angebrachter Höhensensoren) auf der untersuchten Fläche eine vorausschauende Information darüber gewonnen, in welche Position der Erntevorsatz gegenüber der Erntemaschine zu verstellen ist, wenn er an der untersuchten Fläche ankommt. Die mit dem Steuersignal des Senders und Empfängers beaufschlagte Steuerung steuert die Verstelleinrichtung rechtzeitig an, so dass der Erntevorsatz sich spätestens dann, wenn er die untersuchte Fläche erreicht, in der aus dem reflektierten Signal abgeleiteten Position befindet.

Auf diese Weise erreicht man, dass der Erntevorsatz stets in einer gewünschten, im Wesentlichen konstanten Stellung gegenüber dem Erdboden verbleibt. Durch die vorausschauende Ansteuerung der Verstelleinrichtung erhält man eine weichere Reaktion mit verminderten hydraulischen Leistungsanforderungen und weniger Materialstress, insbesondere während mit hoher Geschwindigkeit durchgeführten Arbeiten auf Feldern mit sich abrupt ändernden Bodenkonturen als bei den meisten bisher verfügbaren Systemen. Das Auftreten zu hoher oder gar zu tiefer Einstellungen des Erntevorsatzes, die zur Bodenberührung oder gar zum Eindringen in den Erdboden führen, wenn Vertiefungen oder Erhebungen in der Bodenoberfläche begegnet wird, ist vermieden oder vermindert.

Grundsätzlich wäre es denkbar, dass der Sender und Empfänger nur mit jeweils einem Punkt oder einer begrenzten Anzahl von Punkten des vor der Erntemaschine liegenden Wegs zusammenwirkt. Dazu ist nur ein einziger, fester und somit relativ preiswerter Sensor erforderlich. Da das Entfernungssignal aber nur einen Teil des Bodens vor der Erntemaschine repräsentiert, sind Fehlmessungen und Fehleinstellungen des Erntevorsatz denkbar, wenn die Bodenkontur quer zur Fahrtrichtung wellig ist. Es bietet sich daher an, einen Sender und Empfänger zu verwenden, der zur Erfassung einer Bodenkontur in einer quer zur Fahrtrichtung verlaufenden Richtung eingerichtet ist. Anhand der erfassten Bodenkontur wird durch die Steuerung die Verstelleinrichtung derart angesteuert, dass der Erntevorsatz die jeweils gewünschte Position einnimmt. Der Arbeitsbereich des Senders und Empfängers entspricht in der Regel wenigstens der Arbeitsbreite des Erntevorsatzes.

Der Sender und Empfänger könnte am Erntevorsatz angebracht werden, so dass er direkt eine Information über die Position des Erntevorsatzes gegenüber dem Erdboden erfasst. Weil der Erntevorsatz aber häufig relativ stark vibriert, wird der Sender und Empfänger vorzugsweise vom Erntevorsatz getrennt und unabhängig von Positionsänderungen des Erntevorsatzes angebracht. Er wird insbesondere an der Erntemaschine montiert, beispielsweise an ihrer Bedienerkabine.

Die Verstelleinrichtung kann ein Hubsystem umfassen, das zum Anheben und Absenken des Erntevorsatzes gegenüber der Erntemaschine eingerichtet ist. Vorzugsweise ist zusätzlich oder alternativ ein Neigungssystem vorgesehen, das zum Verschwenken des Erntevorsatzes um eine horizontale, entlang der Fahrtrichtung der Erntemaschine verlaufende Achse eingerichtet ist. Die Steuerung steuert die Höhe und/oder Neigung des Erntevorsatzes gegenüber der Erntemaschine, so dass die gewünschte Position des Erntevorsatzes gegenüber dem Erdboden aufrechterhalten wird.

Der Sender und Empfänger kann eingerichtet sein, die Entfernung zwischen ihm und der Fläche zu erkennen, an der das Signal reflektiert wird. Sobald erkennbar ist, dass die Entfernung an einer bestimmten Stelle absinkt bzw. ansteigt, wird die Verstelleinrichtung veranlasst, den Erntevorsatz an der entsprechenden Stelle anzuheben bzw. abzusenken.

Bezüglich der vom Sender und Empfänger verwendeten Signale sind mehrere Alternativen denkbar. Es können elektromagnetische Signale eines Frequenzbereichs verwendet werden, die das Erntegut durchdringen, z. B. Radarstrahlen, und vom Erdboden reflektiert werden. Dann ist die Steuerung in der Lage, die Kontur des Erdbodens direkt zu erkennen. Andererseits kann der Sender und Empfänger Signale abstrahlen und empfangen, die vom Erntegut reflektiert werden, beispielsweise Lichtwellen, insbesondere im infraroten Bereich. Die Bodenkontur kann dann aus der Kontur des Ernteguts abgeleitet werden, wobei z. B. die Höhe einer detektierten Erntegutkante berücksichtigt werden kann. Der Erntevorsatz kann in dieser Ausführungsform in einer vorbestimmten Höhe unterhalb der Oberseite des Ernteguts betrieben werden, um den Durchsatz durch die Erntemaschine zu vermindern und ihre Produktivität zu vergrößern.

Die Steuerung kann bei der vorausschauenden Konturbestimmung auch die Bodenkontur an den Punkten des Erdbodens berücksichtigen, die von den Rädern oder Gleisketten der Erntemaschine überfahren werden. Dadurch können Bodenwellen oder -erhebungen berücksichtigt werden.

Um den Erntevorsatz rechtzeitig in die jeweils sinnvolle Position verbringen zu können, bietet es sich an, in der Steuerung eine Oberflächenkonturenhistorie abzuspeichern, d. h. eine Information über die Konturen des Erdbodens vor der Erntemaschine in Abhängigkeit von der Position bzw. des Zeitpunkts, an der die einzelnen Konturen abgespeichert wurden. Die Steuerung ist durch die Oberflächenkonturenhistorie betreibbar, die Zeitverzögerung zwischen der Messung der Oberflächenkontur und der Ankunft des Erntevorsatzes an der entsprechenden Fläche zu berücksichtigen.

Insbesondere, wenn der Sender und Empfänger nicht am Erntevorsatz befestigt ist, bietet es sich an, der Steuerung eine Information über die Position des Erntevorsatzes gegenüber der Erntemaschine zuzuführen, die bei der Ansteuerung der Verstelleinrichtung berücksichtigt wird. Diese Information kann durch einen entsprechenden Umsetzer gewonnen werden, der zwischen der Erntemaschine und dem Erntevorsatz angebracht ist und ein Erntevorsatzhöhen- und/oder Erntevorsatzneigungssignal bereitstellt.

Als Sender und Empfänger kann insbesondere eine an sich bekannte Laserentfernungsmessvorrichtung dienen, die zur Abtastung eines bestimmten Winkelbereichs vor der Erntemaschine eingerichtet ist. Da der Abtastwinkelbereich bei vielen derartigen Sendern und Empfängern kleiner als der zum Abtasten der gesamten Arbeitsbreite des Erntevorsatzes dienende Winkelbereich, bietet es sich an, den Sender und Empfänger auf einer drehbaren Struktur, z. B. einem Drehtisch, anzubringen, der ein Abtasten der gesamten Breite des Erntevorsatzes ermöglicht.

Derartige, einen Winkelbereich abtastende Laserentfernungsmessvorrichtungen können zusätzlich zur Detektion einer Erntegutkante dienen. Sie erzeugen ein Erntegutkantenpositionssignal, das zur selbsttätigen Lenkung der Erntemaschine herangezogen werden kann. Ist die Laserentfernungsmessvorrichtung auf einer drehbaren Struktur angebracht, kann letztere die Laserentfernungsmessvorrichtung dann über die Breite des Erntevorsatzes drehen, wenn gerade kein Erntegutkantensignal zur Lenkungssteuerung bereitgestellt wird.

In den Zeichnungen ist ein nachfolgend näher beschriebenes Ausführungsbeispiel der Erfindung dargestellt. Es zeigt:
- Fig. 1: eine Seitenansicht einer Erntemaschine mit einem Steuersystem für die Position des Erntevorsatzes,
- Fig. 2: eine schematische Draufsicht auf die auf einem Feld arbeitende Erntemaschine der Figur 1,
- Fig. 3A und 3B: schematische Darstellungen der Erntemaschine, in der die Wirkungen der Bodenkontur auf die Laufzeit eines Signals des Senders und Empfängers des Steuersystems für die Position des Erntevorsatzes gezeigt werden,
- Fig. 4: eine schematische Darstellung eines Senders und Empfängers und des Steuersystems, das an der Erntemaschine der Figuren 1 bis 3 verwendet wird,
- Fig. 5: eine perspektivische Ansicht eines Senders und Empfängers, der mit dem Steuersystem der Figur 4 verwendet wird,
- Fig. 6: ein typisches Entfernungssignal für eine Abtastung der gesamten Breite des Erntevorsatzes,
- Figur 7: eine Draufsicht auf eine Erntemaschine, in der die Wirkung der Hangneigung auf eine Abtastung der gesamten Breite des Erntevorsatzes gezeigt ist,
- Figur 8: ein typisches Entfernungssignal für die Erntemaschine aus Figur 7,
- Figur 9: eine rückwärtige Ansicht der Erntemaschine aus Figur 7, in der der Erntevorsatz zur Kompensation der Neigung verschwenkt ist,
- Figur 10A und 10B: schematische Darstellungen der Erntemaschine, in denen ein Berechnungsverfahren zur Bestimmung der erwarteten Entfernung zu einem vorn liegenden Ort gezeigt wird,
- Figur 11: ein Flussdiagramm, das einen vom Prozessor der Figur 4 ausgeführten Algorithmus zur Steuerung der Höhe des Erntevorsatzes zeigt,
- Figur 12: ein Flussdiagramm für die Erntevorsatzhöhensteuerungsschleife für den Prozessor im Steuersystem der Figur 4 zum Absenken des Erntevorsatzes oder zur Ausführung kleiner Erntevorsatzanhebungen, wenn die vorausschauende Höhenkontrolle aktiv arbeitet, und
- Figur 13: ein Flussdiagramm, das einen vom Prozessor aus Figur 4 ausgeführten Algorithmus zur Steuerung der Erntevorsatzneigung illustriert.

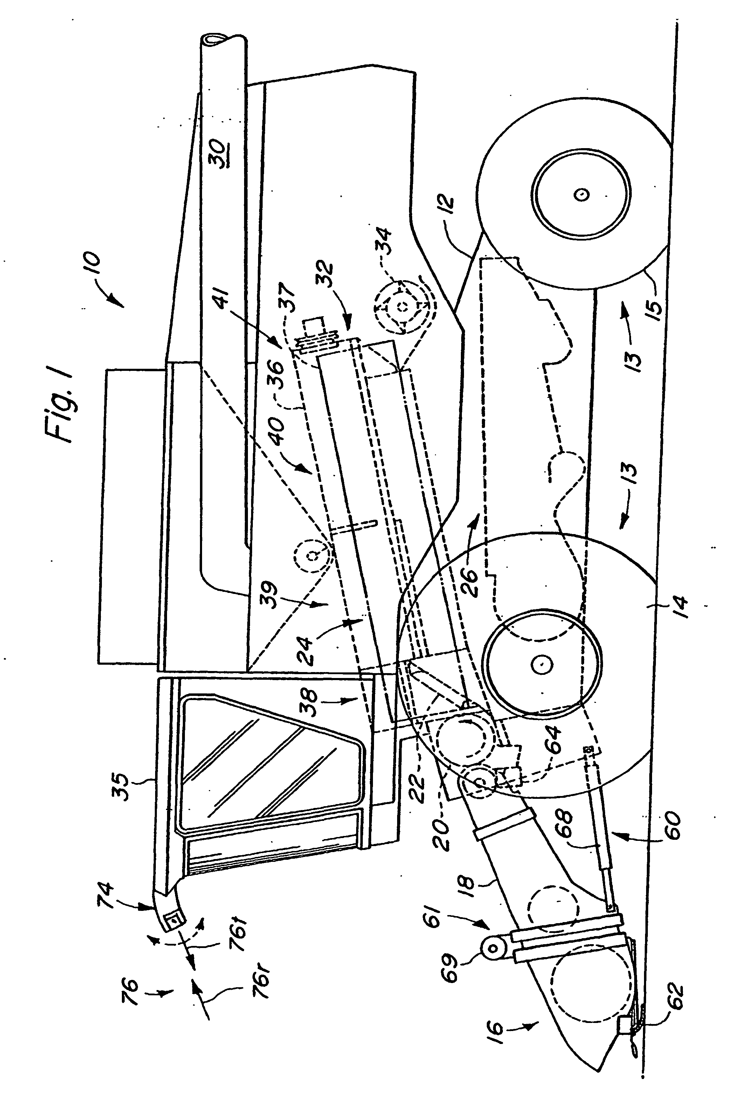

Es wird auf Figur 1 Bezug genommen, in der eine landwirtschaftliche Erntemaschine in Form eines Mähdreschers 10 gezeigt ist, der einen Hauptrahmen 12 mit einer Radanordnung 13 aufweist, die vordere und hintere, im Eingriff mit dem Boden befindliche Räder 14 und 15 umfasst, die den Hauptrahmen 12 zwecks einer Vorwärtsbewegung über ein Feld mit abzuerntendem Erntegut tragen. Obwohl Räder 14 und 15 gezeigt sind, könnte die Radanordnung 13 im Bodeneingriff befindliche Raupen umfassen oder daraus bestehen. Der Antrieb für die vorderen Räder 14 wird über ein konventionelles hydrostatisches Getriebe von einem am Hauptrahmen 12 befestigten Motor bereitgestellt.

Ein vertikal verstellbarer Erntevorsatz 16 in Form eines Schneidwerks wird verwendet, Erntegut abzuernten und es einem Schrägförderer 18 zuzuführen. Der Schrägförderer 18 ist schwenkbar mit dem Hauptrahmen 12 verbunden und umfasst eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Andere Orientierungen und Typen der Drescheinrichtungen und andere Typen von Erntevorsätzen 16, wie quer angeordnete Rahmen, die einzelne Reiheneinheiten tragen, könnten auch verwendet werden.

Die rotierende Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen.

Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird. Obwohl die Erntemaschine als Mähdrescher 10 zur Getreideernte dargestellt ist, bleibt anzumerken, dass die vorliegende Erfindung auch an anderen Typen von Erntemaschinen verwendet werden kann, die vertikal gesteuerte Vorsätze aufweisen.

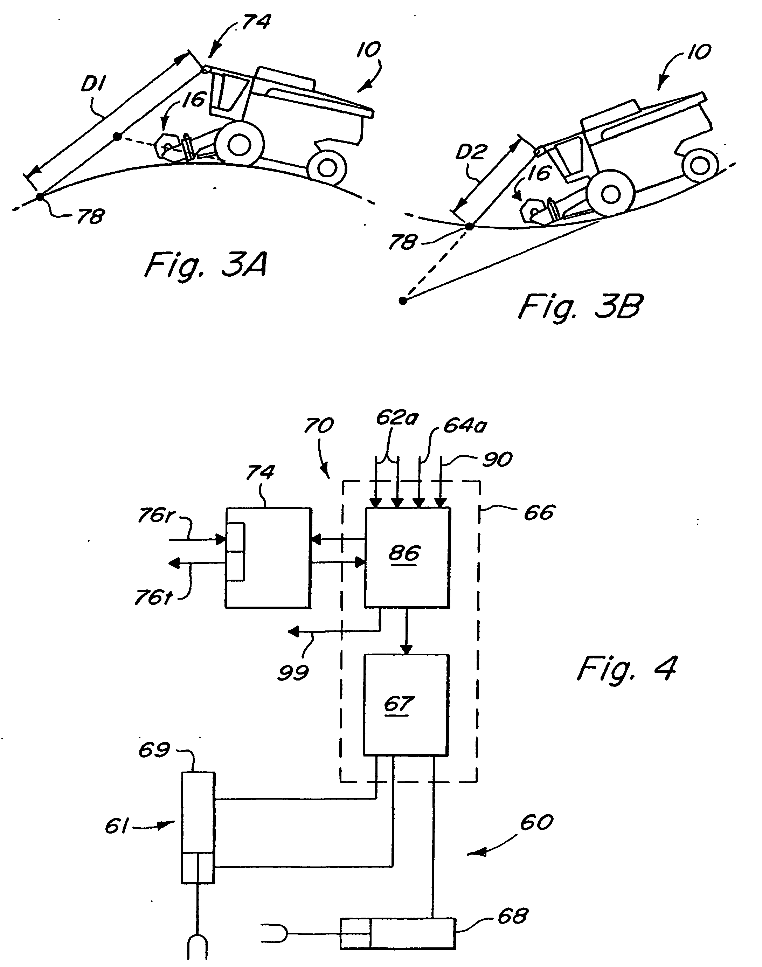

Die Höhe des Erntevorsatzes 16 wird durch ein hydraulisches Hubsystem gesteuert, das insgesamt mit 60 gekennzeichnet ist, und ein Neigungssystem für den Erntevorsatz 16, das insgesamt mit 61 gekennzeichnet ist, kann auch bereitgestellt werden, um der Erntevorsatz 16 im Wesentlichen parallel zur Bodenoberfläche zu halten. Fühler 62 oder andere konventionelle Höhenfühleinrichtungen, wie beispielsweise akustische, an in Querrichtung beabstandeten Stellen des Erntevorsatzes angebrachte Sensoren, stellen eine Information über die Höhe des Erntevorsatzes 16 bereit. Ein Umsetzer 64 am Schrägförderer 18 stellt eine Information über den Winkel des Schrägförderers 18 gegenüber dem Hauptrahmen 12 bereit. Die Signale von den Einrichtungen 62 und 64 werden über Leitungen 62a und 64a (Figur 4) auf eine Steuerung 66 übertragen, die eine elektrohydraulische Ventileinrichtung 67 umfasst, um den hydraulischen Fluss zu und von einem oder zwei Hubzylindern 68 zu steuern, die zwischen dem Schrägförderer 18 und dem Hauptrahmen 12 angeschlossen ist oder sind, um das Hubsystem 60 zu betreiben, um den Erntevorsatz 16 innerhalb eines gewünschten Betriebshöhenbereichs zu halten. Die Ventileinrichtung 67 steuert auch das Ausdehnen und Einziehen eines Neigungszylinders 69, um den Erntevorsatz 16 um eine sich von vorn nach hinten erstreckende Achse zu drehen, so dass er parallel zur Bodenoberfläche arbeitet. Wenn das Signal von einem oder mehreren Sensoren 62 auf einer Seite der Drehachse eine Hubanzeige bereitstellt, während das Signal von der gegenüberliegenden Seite eine Anzeige zum Absenken repräsentiert, wird das Neigungssystem 61 den Zylinder 69 betreiben, um den Erntevorsatz 16 zur geeigneten Höhenkorrektur um die Achse zu neigen. Wenn Sensoren auf beiden Seiten der Achse eine Anheb- oder Absenkanzeige bereitstellen, wird der Zylinder 68 entsprechend ausgestreckt oder eingezogen, um die nötige Höhenkorrektur zu erreichen und den Erntevorsatz 16 in einem vorbestimmten Betriebshöhenbereich zu halten. Ein derartiges Höhenkontrollsystem ist in der zuvor genannten US 4 776 153 A beschrieben. Die Reaktionszeiten des Hubsystems 60 und des Neigungssystems 61 sind jedoch häufig zu langsam, um abrupte Änderungen in der Kontur der Bodenoberfläche auszugleichen, insbesondere, wenn die Erntemaschine 10 mit relativ hohen Geschwindigkeiten betrieben wird. Die Reaktionszeit kann auch zu langsam sein, plötzliche Änderungen der Position des Erntevorsatzes 16 relativ zum Boden auszugleichen, die dadurch bedingt sind, dass eines oder mehrere Räder 14 und 15 der Radanordnung 13 mit einer Vertiefung oder angehobenen Fläche in der Bodenkontur zusammenwirken. Die Fähigkeit, das Erntegut in einer vorbestimmten Entfernung von den Ähren abzuschneiden, um den Durchsatz zu begrenzen, ist ebenfalls begrenzt.

Eine verbesserte Höhensteuerung des Erntevorsatzes 16 umfasst ein insgesamt mit 70 gekennzeichnetes System, das die Boden- oder Erntegutkontur vorausschauend erfasst. Das System 70 ist am Mähdrescher 10 befestigt, um im Wesentlichen über die gesamte Breite des Wegs P des Erntevorsatzes 16 Bodenkonturinformationen bereitzustellen. Das System 70 umfasst einen Sender und Empfänger (Transceiver) 74, der an einer zentralen Stelle an der Bedienerkabine 35 angeordnet ist, um Signale 76 auszustrahlen und zu empfangen. Der Sender und Empfänger 74 strahlt Signale 76t nach unten in einem spitzen Winkel gegenüber der Ebene der Vorwärtsrichtung des Mähdreschers 10 in Richtung auf eine Bodenfläche 77 vor dem Mähdrescher 10 ab. Die Signale 76t werden vorzugsweise über die gesamte Breite W des Wegs P des Erntevorsatzes 16 abgetastet oder abgestrahlt und treffen in einer Entfernung von größenordnungsmäßig 10 bis 20 m vor der Bedienerkabine 35 auf den Boden. Reflektierte Signale 76r werden vom Sender und Empfänger 74 empfangen. Das Zeitintervall zwischen dem Abstrahlen eines Signals 76t und dem Empfang des Signals 76r stellt eine Information über die Entfernung zwischen dem Sender und Empfänger 74 und dem reflektierenden Abschnitt 78 der Bodenoberfläche oder Erntegutoberfläche bereit. Die Information über die Entfernungen stellt wiederum eine Bodenkonturinformation bereit.

Wie am Besten in den Figuren 3A und 3B erkennbar ist, steigt die Entfernung D mit einem Abfall in der Oberflächenkontur (D1 in Figur 3A) und sinkt mit einem Anstieg in der Kontur (D2 in Figur 3B) . Wenn daher über die Breite einer Fläche 77 eine ansteigende Entfernung detektiert wird, kann die Steuerung 66 ein Absenken des Erntevorsatzes 16 veranlassen, bevor der Erntevorsatz 16 und die Einrichtungen 62 die Fläche 77 erreichen. Wenn die Entfernung D über die Breite der Fläche 77 absinkt, was darauf hinweist, dass der Erntevorsatz 16 bald einer Anhebung begegnen wird, kann die Steuerung 66 ein Anheben des Erntevorsatzes 16 veranlassen. Das System 70 wird vorzugsweise verwendet, den Betrieb der die Höhe fühlenden Einrichtung 62 am Erntevorsatz 16 zu ergänzen und eine frühzeitige Reaktion der Höhensteuerung auf sich schnell ändernde Bodenkonturen zu veranlassen, um die Reaktionszeit zu verkleinern und die Hubleistungsanforderungen zu vermindern. Das System 70 kann jedoch auch als primäre Steuerung der Höhe des Erntevorsatzes 16 verwendet werden, wenn gewünscht. Wenn beispielsweise die Position des Erntevorsatzes 16 derart gesteuert wird, dass der Erntegutschnitt in einem bestimmten Abstandsbereich von den Ähren erfolgt, sind Bodenberührungen kein Problem und die Steuerung liegt primär beim System 70.

Das System 70 kann auch verwendet werden, um den Betrieb des Neigungssystems 61 zu ergänzen und erforderliche Winkeländerungen des Erntevorsatzes 16 vorherzusehen, um Situationen zu vermeiden, in denen der Erntevorsatz 16 wesentlich gegenüber einer parallelen Beziehung zum Boden versetzt ist. Wenn die eine Seite des Bodens für eine Fläche im Verhältnis zur gegenüberliegenden Seite ansteigt, kann eine vorausschauende Information für die für diese Fläche erforderliche Neigung bereitgestellt werden, um eine rechtzeitige Antwort des Neigungssystems 61 sogar bei hohen Geschwindigkeiten zu erzielen.

Die von den Signalen 76 abgetastete Fläche umfasst Flächen 80, die im Wesentlichen im Weg der Radanordnung 13 des Mähdreschers 10 liegen, so dass die Kontur des die Räder 14 und 15 abstützenden Bodens in Betracht gezogen werden kann, wenn das System 70 die gewünschte Höhensteuerungsantwort für die Fläche 77 vorherberechnet. Das System 70 umfasst einen Prozessor 86 zur Berechnung von Entfernungen D basierend auf der Signallaufzeit und zum Umsetzen der Entfernungen in Bodenkonturinformationen. Die Konturinformation für jede Fläche 77 wird in einem Speicher abgelegt, um eine Bodenkonturhistorie im Wesentlichen über eine Länge des Wegs P bereitzustellen, die sich von der gegenwärtigen Fläche 77, von der eingehende Signale 76t empfangen werden, nach hinten bis in eine Entfernung erstreckt, die zumindest gleich der Entfernung zwischen dem Erntevorsatz 16 und den hinteren Rädern 15 ist. Daher kann der Effekt sich ändernder Bodenkonturen unter der Radanordnung 13 auf die Position des Erntevorsatzes 16 in die gewünschte Höhenänderung für jede gegebene Fläche 77 einbezogen werden. Der Prozessor 86 kann die erwartete Höhenantwort für eine gegebene Fläche 77 anhand einer zeitbasierenden Historie der Konturflächen oder einer entfernungsbasierenden Historie berechnen. Für eine entfernungsbasierende Historie wird über die Leitung 90 dem Prozessor 86 eine Mähdreschergeschwindigkeitsinformation zugeführt. Zur Identifikation der von den Rädern 14, 15 befahrenen Fläche kann dem Prozessor 86 auch eine Lenkinformation zugeführt werden, die von einem automatischen Lenksystem und/oder der manuellen Lenkeinrichtung abgenommen wird, und anhand der der künftige Weg des Mähdreschers 10 erkennbar ist.

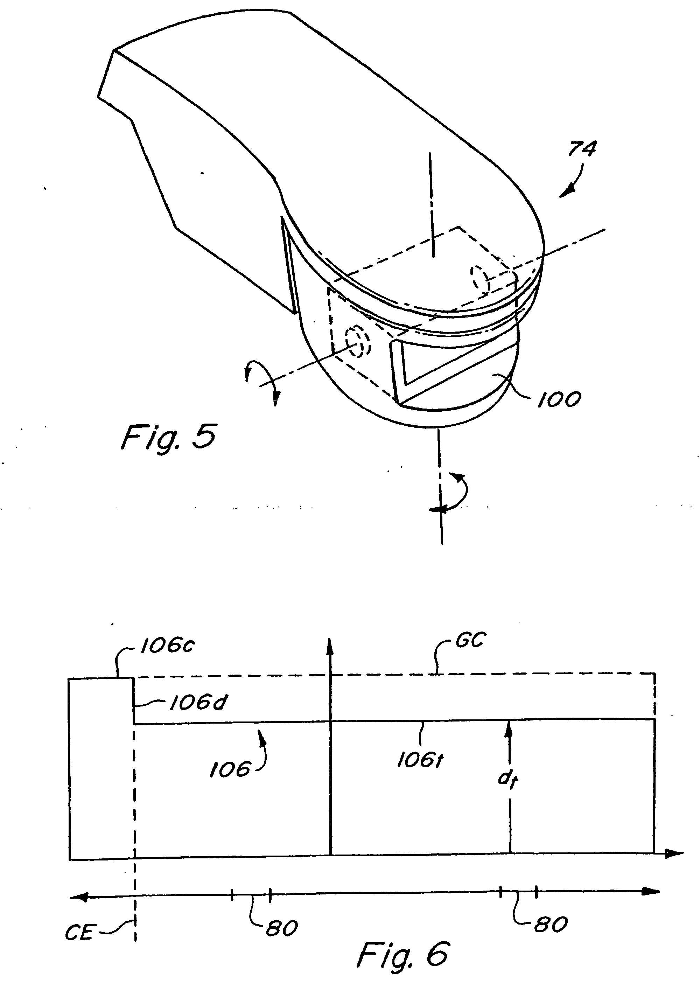

Bei einer Ausführungsform strahlt der Sender und Empfänger 74 ein Signal 76t ab, das stehendes Erntegut durchdringen und den Erdboden erreichen kann, wie ein Hochfrequenzradarstrahl. In einer anderen Ausführungsform kann ein Laserentfernungsmessgerät, wie beispielsweise ein Lasermesssystem eines Modells der Serie LMS 200 der Fa. Sick, oder ein auf einem als drehbare Struktur dienenden Drehtisch 100 angebrachter Erntegutkantensensor (Figur 5) verwendet werden, um eine Gutoberflächenkontur festzustellen, die sich im Wesentlichen der darunterliegenden Bodenoberflächenkontur annähert. Der Erntegutkantensensor der Figur 5 hat einen begrenzten Abtastbereich von etwa 15°, um die Erntegutkante festzustellen und auf der Leitung 99 ein Führungssteuerungssignal bereitzustellen. Der Drehtisch 100 dreht den Sensor um eine aufrechte Achse, um in mehreren Schritten während zwischen Führungssteuerungssignalen liegender Zeitabschnitte eine Durchführung eines Abtastvorgangs der gesamten Breite des Erntevorsatzes 16 zu ermöglichen, der in der Größenordnung von 90° liegt. Die Frequenz der Abtastungen ist vorzugsweise abhängig von Abweichungen der Erntegutkante von einem geraden Weg, wobei mehr Abtastvorgänge möglich sind, wenn die Erntegutkante gerade ist und weniger Führungskorrekturen erforderlich sind.

Es wird auf Figur 6 Bezug genommen, in der ein typisches Abtastsignal des Laser-Gutkantensensors 74 aus Figur 5 über die gesamte Breite des Erntevorsatzes 16 durch die durchgezogene Linie bei 106 wiedergegeben wird. Die Entfernung, die anhand der von den Signalen 76t zur Reise zur Fläche 77 und von den entsprechenden, reflektierten Signalen 76r, um vom Sender und Empfänger 74 empfangen zu werden, benötigten Zeit berechnet wird, ist für eine typische Abtastung von etwa 90° gegen den Abtastwinkel aufgetragen. Der Bereich 106c repräsentiert die Signale, die von dem Boden in der Fläche 108 außerhalb der Gutkante (CE) reflektiert wurden. An der Gutkante CE wird ein plötzliches Absinken in der gemessenen Entfernung stattfinden, dargestellt durch das Segment 106d, da das Signal 76t von der Oberseite des Ernteguts anstelle vom Boden reflektiert wird. Die Entfernung dₜ zur Oberseite des Ernteguts über die Breite W des Wegs P wird durch das Segment 106t repräsentiert. Daher kann eine theoretische Bodenkontur (GC) abgeschätzt werden, indem die Entfernungsänderung an der Gutkante, die durch die Länge des Segments 106d repräsentiert wird, zu jedem Entfernungsmesswert im Segment 106 addiert wird. Die theoretische Bodenkontur GC wird dem Hubsystem 61 als Eingabe bereitgestellt. Wenn ein Sender mit das Erntegut durchdringendem Signal verwendet wird, wird die aktuelle Bodenkontur detektiert und die Entfernung dₜ wird der Linie GC in Figur 6 entsprechen. Wenn die Position des Erntevorsatzes 16 derart gesteuert wird, dass er das Erntegut in einer vorbestimmten Entfernung unterhalb der Gutähren abschneidet, wird die Gutoberflächenkonturvorausschau von der Steuerung 66 verwendet.

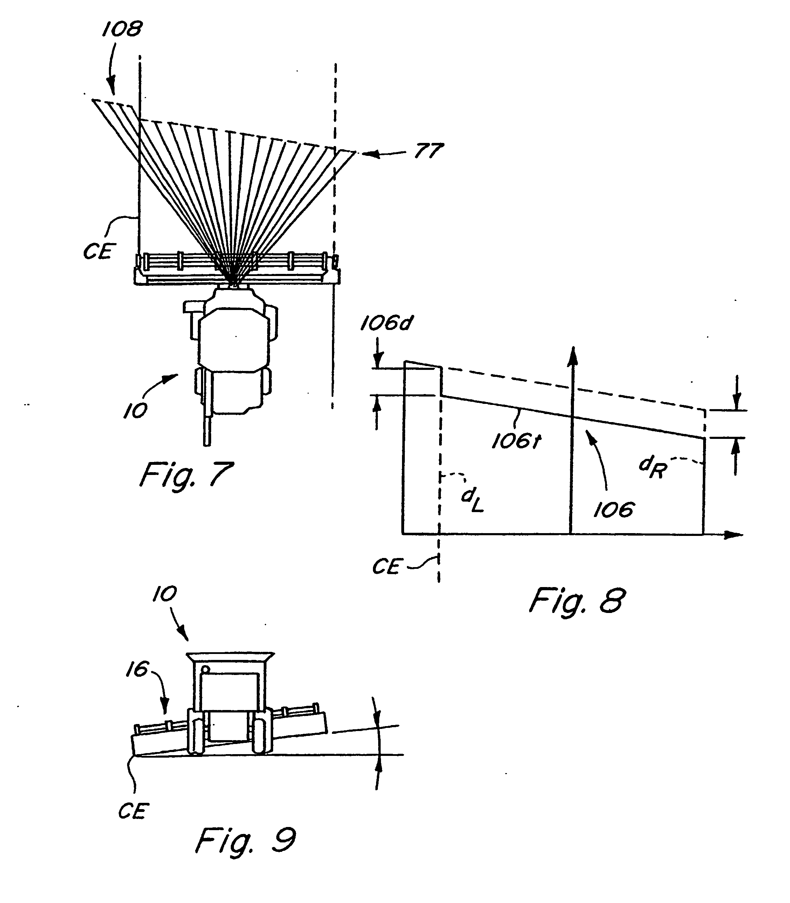

Die Figuren 7, 8 und 9 illustrieren eine Bodenkonturvorausschau zur Veranlassung einer rechtzeitigen Reaktion des Neigungssystems 61, um eine im Wesentliche parallele Beziehung zwischen dem Erntevorsatz 16 und der Bodenoberfläche aufrecht zu erhalten. Wie in Figur 8 erkennbar, zeigt das Abtastsignal 106 eine absinkende Entfernung von der Gutkante CE (die an der linken Seite des Abtastvorgangs gemessene Entfernung D_{L} ist größer als die an der rechten Seite des Abtastvorgangs gemessene Entfernung D_{R}) zur gegenüberliegenden Seite des Erntevorsatzes 16 an, was wiederum darauf hinweist, dass die nun kommende Fläche zur Gutkante CE hin nach unten geneigt ist (Figur 8). Der Prozessor 86 (Figur 4) berechnet die für die bestrahlte Fläche erforderliche Neigung des Erntevorsatzes 16 und signalisiert der elektrohydraulischen Ventileinrichtung 67, dass sie mit einer Betätigung des Neigungszylinders 69 beginnen soll, um sicherzustellen, dass der Erntevorsatz 16 bis zu dem Zeitpunkt einen geeigneten Schwenkwinkel hat, an dem der Erntevorsatz 16 die Fläche erreicht.

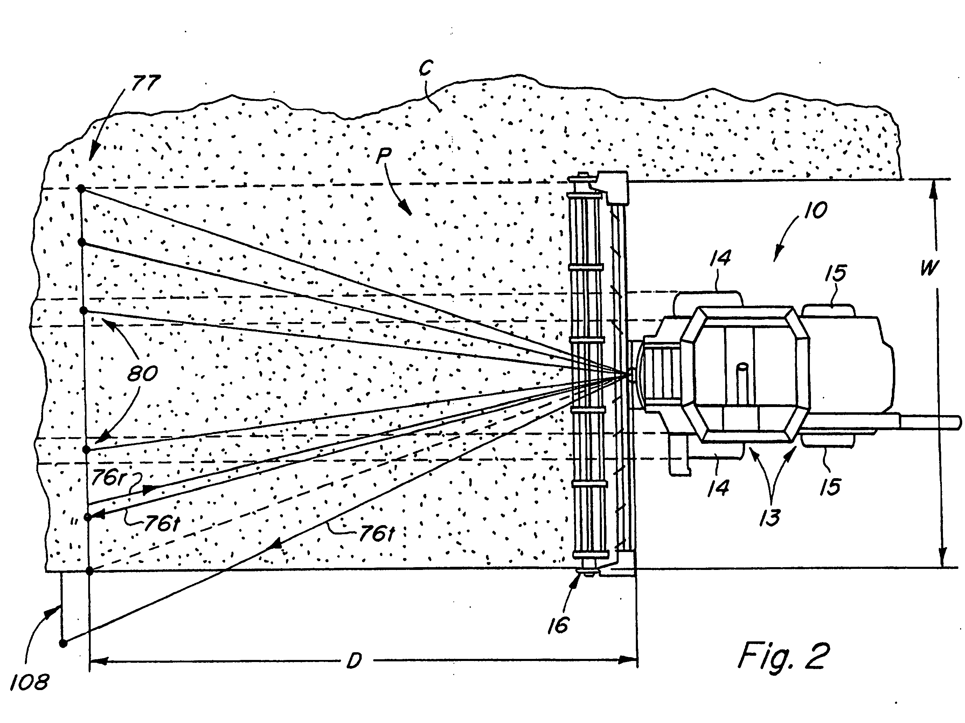

Der Übertragungswinkel der Signale 76t gegenüber der Horizontalen kann geändert werden, um die Entfernung D (Figur 2) zwischen dem Erntevorsatz und der bestrahlten Bodenfläche zu vergrößern oder zu verkleinern, wenn sich die Vortriebsgeschwindigkeit des Mähdreschers 10 vergrößert oder verkleinert. Der Winkel wird derart ausgewählt, dass hinreichende Vorlaufzeiten für das Hubsystem 60 und das Neigungssystem 61 bereitgestellt werden, so dass sie auf sich schnell ändernde Bodenkonturen reagieren können.

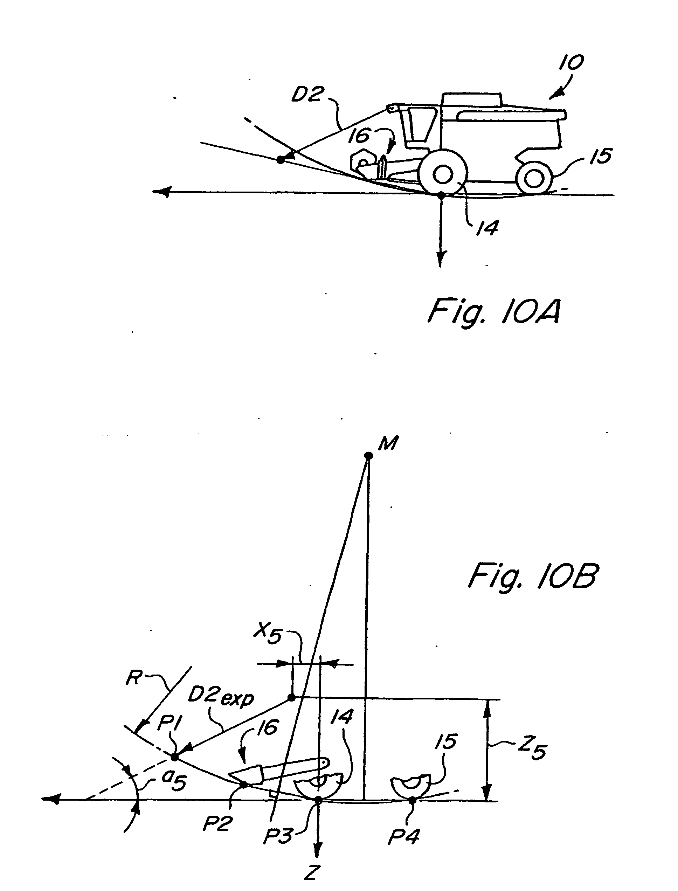

Nur als Beispiel zeigen die Figuren 10A und 10B ein Berechnungsverfahrensmodell zur Abschätzung einer erwarteten Entfernung (D2) in einem x-y-Koordinatensystem, in dem vier Punkte P1 - P4 auf einem Kreis M mit großem Radius R angeordnet sind, so dass die Berechnung linearisiert werden kann. Die Sensorposition ist (x₅, z₅) und a₅ ist der Neigungswinkel des Sensors (nach unten). Der Winkel des Schrägförderers 18 ist null, wenn sich der Erntevorsatz 16 auf dem Boden befindet. P1 ist der Punkt auf der Kontur der Fläche, der bestrahlt wird. P2 ist ein Punkt auf dem Erntevorsatz 16 und P3 und P4 sind Radkontaktpunkte. Andere konventionelle Berechnungsverfahren können zur Boden- und Erntegutkonturvorausberechnung basierend auf der Signallaufzeit genutzt werden.

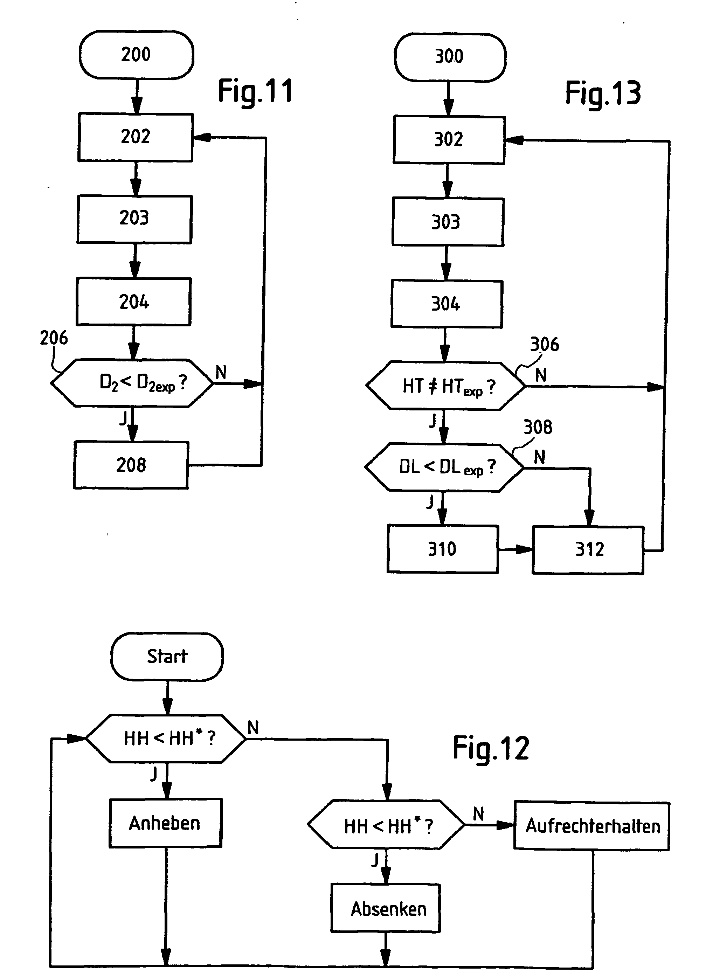

Es wird auf Figur 11 verwiesen, gemäß der, nachdem die vorausschauende Steuerung des Erntevorsatzes 16 bei 200 initiiert wurde, der Prozessor 86 bei 202 die auf der Signallaufzeit basierende Entfernung D2 bestimmt. Bei 203 wird der gegenwärtige Winkel des Schrägförderers 18 basierend auf dem Signal des Umsetzers 64 am Schrägförderer 18 und die gegenwärtige Höhe des Erntevorsatzes 16 anhand des Schrägförderersignals und von Signalen von den Höhenfühleinrichtungen 62 bestimmt. Bei 204 wird die erwartete Entfernung basierend auf dem Schrägfördererwinkel und der Höhe des Erntevorsatzes 16 berechnet. Die gemessene Entfernung D2 (Schritt 202) wird mit der erwarteten Entfernung (Schritt 204) verglichen, und wenn die gemessene Entfernung D2 kleiner ist als die erwartete Entfernung (206), was darauf hinweist, dass die Kontur ansteigt, signalisiert der Prozessor 86 der Ventileinrichtung 67, den Erntevorsatz 16, erforderlichenfalls mit einer zeit- oder entfernungsbasierenden Verzögerung, anzuheben (Schritt 208), um die Positionierung des Erntevorsatzes 16 für die betreffende Fläche auf dem Weg P mit der Ankunft des Erntevorsatzes 16 an dieser Fläche zu koordinieren. Wenn die Höhe des Erntevorsatzes 16 innerhalb des gewünschten Höhenbereichs ist (206), oder nachdem das Anheben bei 208 initiiert wurde, wird der Kreislauf wieder angefangen, da der Prozessor 86 zum Schritt 202 zurückkehrt.

Eine in Figur 12 gezeigte Steuerschleife ermöglicht ein Absenken und kleine Anhebungen des Erntevorsatzes basierend auf Höhensignalen des Erntevorsatzes von den Höhenfühleinrichtungen 62 am Erntevorsatz 16 und auf dem Schrägfördererwinkelsignal. Die aktuelle Höhe des Erntevorsatzes HH, die auf den Signalen von den Höhenfühleinrichtungen 62 und des Umsetzers 64 basiert, wird im Schritt 210 mit einem gewünschten Höhenbereich HH* des Erntevorsatzes 16 verglichen. Falls die gewünschte Höhe HH* kleiner ist als die gemessene Höhe HH, signalisiert der Prozessor 86 der Ventileinrichtung 67, die Zylinder 68 auszustrecken und den Erntevorsatz 16 anzuheben. Wenn die Höhe des Erntevorsatzes 16 in 212 unterhalb des gewünschten Höhenbereichs liegt, werden die Zylinder 68 eingezogen, um den Erntevorsatz 16 abzusenken. Die Höhe des Erntevorsatzes 16 wird beibehalten (214), wenn sie im gewünschten Bereich liegt. Bei der vorausschauenden Steuerschleife der Figur 11 ignoriert der Prozessor 86 Signale von den Höhenfühleinrichtungen 62, die ein Absenken des Erntevorsatzes signalisieren, wenn der Erntevorsatz bei 208 wegen einer vorhergesagten Konturenänderung auf einer Fläche angehoben wird, um plötzliche Umkehrungen des Hubsystems zu vermeiden und eine adäquate Systemantwortzeit sicherzustellen, um Probleme wie Bodenberührungen oder Abschneiden des Ernteguts zu weit unterhalb der Ähren auf der betroffenen Fläche zu vermeiden.

Ein vorausschauendes Absenken des Erntevorsatzes ist in der Regel bei Verfahrensweisen nicht erforderlich, in denen die Höhe des Erntevorsatzes 16 innerhalb eines Betriebsbereichs von Höhen gegenüber der Bodenoberfläche aufrecht erhalten wird, weil das Gewicht des Erntevorsatzes 16 eine schnelle Absenkrate bedingt. Wenn die Erntemaschine jedoch in einem Modus betrieben wird, in dem das Erntegut unterhalb der Ähren abgeschnitten wird, ist es in der Regel vorteilhaft, wenn der Betrieb rein vorausschauend ist. Wenn in einem derartigen Modus gearbeitet wird, wird die Steuerschleife der Figur 11 modifiziert, so dass sie einen zusätzlichen Entscheidungsblock enthält, um eine vorausschauende Absenkfunktion an dem Zweig des Blocks 206 zu enthalten, der einer "Nein"-Antwort entspricht. Bevor die Steuerung wieder zum Block 202 zurückkehrt, wird die Entfernung D2 geprüft, um zu sehen, ob sie größer als die erwartete Entfernung ist, was darauf hindeutet, dass die Gutkontur abfällt und ein Absenken des Erntevorsatzes 16 erforderlich sein wird, um das Abschneiden des Ernteguts in dem gewünschten Entfernungsbereich unterhalb der Ähren aufrecht zu erhalten. Der Prozessor 86 signalisiert der Ventileinrichtung 67, den Erntevorsatz 16 mit einer Zeitverzögerung abzusenken, um das Absenken des Erntevorsatzes 16 mit der Ankunft des Erntevorsatzes 16 an der vermessenen Fläche zu koordinieren. Da das Absenken des Erntevorsatzes 16 viel schneller als das Anheben ist, ist die Zeitverzögerung zur Veranlassung des Absenkens typischerweise größer als die Zeitverzögerung zur Veranlassung des Anhebens. Die Steuerung geht dann wieder auf 202 zurück.

Wenn der Mähdrescher 10 mit einem Neigungssystem 61 ausgestattet ist, erfolgt die Steuerung des Systems entsprechend des in Figur 13 dargestellten Flussdiagramms. Nach Initiierung der vorausschauenden Neigungssteuerung bei 300 werden bei 302 die Entfernungen D_{L} und D_{R} jeweils auf der linken und rechten Seite der Mittellinie des Mähdreschers 10 gemessen. Der Neigungswinkel HT des Erntevorsatzes 16 wird bei 303 mit einem (nicht gezeigten) konventionellen Wandler gemessen, der am Schrägförderer 18 zwischen dem Schrägfördererrahmen und einer den Erntevorsatz 16 halternden Frontplatte angebracht ist. Nachdem HT gemessen wurde, berechnet der Prozessor 86 bei 304 die erwartete Neigung des Erntevorsatzes HTₑₓₚ basierend auf dem bei 303 gefundenen Wert und berechnet die erwarteten Entfernungen DLₑₓₚ und DRₑₓₚ. Wenn die gemessene Neigung HT nicht innerhalb eines vorausgewählten Bereichs von Winkeln gegenüber der erwarteten Neigung HTₑₓₚ (306) ist, wird bei 308 die Entfernung D_{L} mit der Entfernung DLₑₓₚ verglichen. Wenn die Entfernung D_{L} geringer ist als DLₑₓₚ, was darauf hindeutet, dass die linke Seite des Erntevorsatzes 16 für die kommende Fläche anzuheben sein wird, signalisiert der Prozessor 86 der elektrohydraulischen Ventileinrichtung 67, eine Betätigung des Neigungszylinders 69 zu initiieren, um die linke Seite des Erntevorsatzes 16 anzuheben (310). Falls die Entfernung D_{L} größer als Dlₑₓₚ ist, was darauf hinweist, dass die linke Seite des Erntevorsatzes 16 zu hoch ist, signalisiert der Prozessor 86 der Ventileinrichtung 67, eine Betätigung des Neigungszylinders 69 zu initiieren, um die linke Seite des Erntevorsatzes 16 abzusenken (312). Wenn der gemessene HT im gewünschten Bereich ist (306) oder, nachdem die erforderliche Neigungskorrektur initiiert wurde (310 oder 312), kehrt der Prozessor 86 zu Schritt 302 zurück. Die konventionelle Neigungskorrektur, die die quer beabstandeten Höhenfühleinrichtungen 62 am Erntevorsatz 16 verwendet, bleibt vorzugsweise im Betrieb und ist für unbedeutendere Korrekturen am Neigungswinkel des Erntevorsatzes 16 verantwortlich.

Falls der Mähdrescher 10 in stehendem Gut arbeitet und das System 70 eingestellt ist, das Erntegut in einem vorbestimmten Entfernungsbereich unterhalb der Ähren des Ernteguts abzuschneiden, wird das System vorzugsweise im vorausschauenden Modus betrieben, ohne Bedarf an am Erntevorsatz 16 angebrachten Sensoren, und ein vorausschauendes Absenken des Erntevorsatzes 16 ist in der Steuerschleife der Figur 11 aktiviert, wie oben beschrieben. Auch ist die Verzögerung zwischen der Konturvorausschau und dem Betrieb der Hub- und Neigungszylinder 68, 69 vorzugsweise geschwindigkeitsabhängig (ortsbasiert), um die Genauigkeit gegenüber einer nur zeitabhängigen Steuerung zu verbessern.

## Patentansprüche

1. System (70) zur Verstellung eines Erntevorsatzes (16) einer Erntemaschine, mit einer zur Verstellung des Erntevorsatzes (16) gegenüber der Erntemaschine eingerichteten Verstelleinrichtung, einer zur Ansteuerung der Verstelleinrichtung eingerichteten Steuerung (66) und einem Sender und Empfänger (74), der Signale (76t) auf eine Fläche (77) abstrahlt, die in Fahrtrichtung vor dem Erntevorsatz (16) auf einem von der Erntemaschine zurückzulegenden Weg (P) liegt, auf dem Erntegut vorhanden ist, und von der Fläche (77) reflektierte Signale (76r) empfängt und der Steuerung (66) anhand der empfangenen Signale (76r) ein Steuersignal zur Verstellung des Erntevorsatzes (16) zuführt, wobei die Steuerung (66) die Verstelleinrichtung anhand des Steuersignals derart ansteuert, dass der Erntevorsatz (16) eine im Wesentlichen konstante Stellung gegenüber dem Erdboden einnimmt, **dadurch gekennzeichnet, dass** die Steuerung (66) betreibbar ist, die Verstelleinrichtung zu veranlassen, den Erntevorsatz (16) zu verstellen, bevor er die Fläche (77) erreicht hat, von der das Signal reflektiert wurde.

2. System nach Anspruch 1, **dadurch gekennzeichnet, dass** der Sender und Empfänger (74) eine Bodenkontur entlang einer quer zur Fahrtrichtung verlaufenden Richtung erfasst.

3. System (70) nach Anspruch 1 oder 2, **dadurch gekennzeichnet, dass** der Sender und Empfänger (74) vom Erntevorsatz (16) versetzt und unabhängig von Positionsänderungen des Erntevorsatzes (16) angeordnet ist, insbesondere an der Erntemaschine.

4. System nach einem der vorhergehenden Ansprüche, **dadurch gekennzeichnet, dass** die Verstelleinrichtung ein Hubsystem (60) und/oder ein Neigungssystem (61) umfasst, und dass die Steuerung (66) die Verstelleinrichtung derart ansteuert, dass die Höhe und/oder Neigung des Erntevorsatzes (16) in einer im Wesentlichen konstanten Position gegenüber dem Erdboden bleibt.

5. System (70) nach Anspruch 4, **dadurch gekennzeichnet, dass** die Steuerung (66) betreibbar ist, eine Änderung der Entfernung zwischen dem Sender und Empfänger (74) und der Fläche (77) zu erkennen und ein Absenken wenigstens eines Teils des Erntevorsatzes (16) zu initiieren, wenn die erkannte Änderung der Entfernung eine ansteigende Entfernung zu der Fläche (77) anzeigt, die der betreffende Teil des Erntevorsatzes (16) überqueren wird und ein Anheben wenigstens eines Teils des Erntevorsatzes (16) zu initiieren, wenn die erkannte Änderung der Entfernung eine absinkende Entfernung zu der Fläche (77) anzeigt, die der betreffende Teil des Erntevorsatzes (16) überqueren wird.

6. System (70) nach einem der Ansprüche 1 bis 5, **dadurch gekennzeichnet, dass** der Sender und Empfänger (74) betreibbar ist, Signale abzustrahlen, die das Erntegut durchdringen, so dass die Steuerung (66) betreibbar ist, die Kontur des Erdbodens zu erkennen.

7. System (70) nach einem der Ansprüche 1 bis 5, **dadurch gekennzeichnet, dass** der Sender und Empfänger (74) betreibbar ist, von der Oberseite des Ernteguts reflektierte Signale zu erfassen.

8. System (70) nach Anspruch 7, **dadurch gekennzeichnet, dass** die Steuerung (66) betreibbar ist, die Bodenkontur anhand der von der Oberseite des Ernteguts reflektierten Signale abzuleiten, insbesondere unter Berücksichtigung einer Erntegutkante.

9. System (70) nach Anspruch 7 oder 8, **dadurch gekennzeichnet, dass** die Steuerung (66) betreibbar ist, den Erntevorsatz (16) zum Arbeiten in einer Höhe zu positionieren, die innerhalb eines vorbestimmten Abstandsbereichs unterhalb der Oberseite des Ernteguts liegt.

10. System (70) nach einem der vorhergehenden Ansprüche, **dadurch gekennzeichnet, dass** die Steuerung (66) betreibbar ist, die Kontur des Erdbodens zu erkennen, auf dem eine Radanordnung (13) der Erntemaschine abgestützt wird, wenn der Erntevorsatz (16) die Fläche (77) erreicht hat, von der das Signal (76t) reflektiert wurde, und die Verstelleinrichtung entsprechend anzusteuern.

11. System (70) nach einem der vorhergehenden Ansprüche, **dadurch gekennzeichnet, dass** der Sender und Empfänger (74) betreibbar ist, Signale auf eine Fläche (77) auszustrahlen und von ihr zu empfangen, die eine Breite hat, die im Wesentlichen der Breite des Erntevorsatzes (16) entspricht.

12. System (70) nach einem der Ansprüche 1 bis 11, **dadurch gekennzeichnet, dass** die Steuerung (66) eine Oberflächenkonturhistorie der Bodenoberfläche vor dem Erntevorsatz (16) bereitstellt und die Zeitverzögerung zwischen der Messung der Oberflächenkontur und der Ankunft des Erntevorsatzes (16) auf der Fläche (77) ausgleicht.

13. System (70) nach einem der Ansprüche 1 bis 12, **dadurch gekennzeichnet, dass** ein Umsetzer (64) zwischen dem Erntevorsatz (16) und der Erntemaschine angekoppelt ist und ein Erntevorsatzhöhensignal und/oder Erntevorsatzneigungssignal bereitstellt, das von der Steuerung (66) berücksichtigt wird.

14. System (70) nach einem der Ansprüche 2 bis 13, **dadurch gekennzeichnet, dass** der Sender und Empfänger (74) die Fläche (77) quer zur Fahrtrichtung abtasten und einen Abtastwinkelbereich haben, der wesentlich kleiner ist, als der zum Abtasten der Breite des Erntevorsatzes (16) erforderliche Winkelbereich, und dass der Sender und Empfänger (74) auf einer drehbaren Struktur angebracht ist, die betreibbar ist, den Sender und Empfänger (74) zu drehen, so dass die gesamte Breite des Erntevorsatzes (16) abtastbar ist.

15. System (70) nach einem der Ansprüche 1 bis 14, **dadurch gekennzeichnet, dass** der Sender und Empfänger (74) zur Detektion einer Erntegutkante eingerichtet ist, deren Erntegutkantensignal vorzugsweise einer Lenkeinrichtung der Erntemaschine zugeführt wird.

16. System (70) nach Anspruch 15, **dadurch gekennzeichnet, dass** die drehbare Struktur in Zeiträumen betrieben wird, in denen kein Erntegutkantensignal zur Lenkungssteuerung bereitgestellt wird.

## Claims

1. A system (70) for adjusting a harvesting header (16) of a harvesting machine, with an adjusting device arranged to adjust the harvesting header (16) relative to the harvesting machine, a controller (66) for controlling the adjusting device and a transmitter and receiver (74) which radiates signals (76t) in an area (77) which lies ahead of the harvesting header (16) on a path (P) to be traversed by the harvesting machine, in which crop is present, and receives signals (76r) reflected from the area (77) and passes a control signal based on the received signals (76r) to the controller (66) for adjusting the harvesting header (16), wherein the controller (66) so controls the adjusting device on the basis of the control signal that the harvesting header (16) assumes a substantially constant position relative to the ground, **characterized in that** the controller (66) is operable to cause the adjusting device to adjust the harvesting header (16) before it has reached the area (77) from which the signal has been reflected.

2. A system according to claim 1, **characterized in that** the transmitter and receiver (74) detects a ground contour along a direction running transverse to the direction of travel.

3. A system (70) according to claim 1 or 2, **characterized in that** the transmitter and receiver (74) is arranged offset from the harvesting header (16) and independent of changes in position of the harvesting header (16), in particular on the harvesting machine.

4. A system according to any of the preceding claims, **characterized in that** the adjusting device comprises a lift system (60) and/or a tilt system (61), and **in that** the controller (66) so controls the adjusting device that the height and/or tilt of the harvesting header (16) remains in a substantially constant position relative to the ground.

5. A system (70) according to claim 4, **characterized in that** the controller (66) is operable to detect an alteration in the distance between the sender and receiver (74) and the area (77) and to initiate a lowering of at least a part of the harvesting header (16) when the detected alteration of the distance indicates an increasing distance to the area (77) which will be traversed by the corresponding part of the harvesting header (16), and to initiate a raising of at least a part of the harvesting header (16) when the detected alteration of the distance indicates a reducing distance to the area (77) which will be traversed by the corresponding part of the harvesting header (16).

6. A system (70) according to any of claims 1 to 5, **characterized in that** the sender and receiver (74) is operable to radiate signals which penetrate the crop, so that the controller (66) is operable to detect the contour of the ground.

7. A system (70) according to any of claims 1 to 5, **characterized in that** the sender and receiver (74) is operable to detect signals reflected from the upper side of the crop.

8. A system (70) according to claim 7, **characterized in that** the controller (66) is operable to derive the ground contour on the basis of signals reflected from the upper side of the crop, in particular taking into account a crop edge.

9. A system (70) according to claim 7 or 8, **characterized in that** the controller (66) is operable to position the harvesting header (16) for working at a height which lies within a predetermined distance range below the upper side of the crop.

10. A system (70) according to any of the preceding claims, **characterized in that** the controller (66) is operable to detect the contour of the ground on which a wheel arrangement (13) of the harvesting machine is supported when the harvesting header (16) has reached the area (77) from which the signal (76t) was reflected, and to control the adjusting device correspondingly.

11. A system (70) according to any of the preceding claims, **characterized in that** the sender and receiver (74) is operable to radiate signals to and receive from an area (77) which has a width which corresponds substantially to the width of the harvesting header (16).

12. A system (70) according to any of claims 1 to 11, **characterized in that** the controller (66) provides a surface contour history of the ground surface ahead of the harvesting header (16) and compensates for the time delay between the measurement of the surface contour and the arrival of the harvesting header (16) at the area (77).

13. A system (70) according to any of claims 1 to 12, **characterized in that** an encoder (64) is coupled between the harvesting header (16) and the harvesting machine and provides a harvesting header height signal and/or a harvesting header tilt signal which is taken into account by the controller (66).

14. A system (70) according to any of claims 2 to 13, **characterized in that** the sender and receiver (74) senses the area (77) transverse to the direction of travel and has a sensing angle range which is substantially smaller than the angle range necessary to sense the width of the harvesting header (16), and **in that** the sender and receiver (74) is fitted on a rotatable structure which is operable to turn the sender and receiver (74), so that the whole width of the harvesting header (16) can be sensed.

15. A system (70) according to any of claims 1 to 14, **characterized in that** the sender and receiver (74) is arranged to detect a crop edge whose crop edge signal is preferably fed to a steering device of the harvesting machine.

16. A system (70) according to claim 15, **characterized in that** the rotatable structure is operated in intervals of time in which no crop edge signal is provided to the steering controller.

## Revendications

1. Système (70) de réglage d'un mécanisme de coupe (16) d'une machine de récolte, comportant un dispositif de réglage, conçu pour régler le mécanisme de coupe (16) par rapport à la machine de récolte, une commande (66), conçue pour activer le dispositif de réglage, et un dispositif émetteur et récepteur (74) qui envoie des signaux (76t) sur une surface (77), qui est située, dans le sens de déplacement du véhicule, devant le mécanisme de coupe sur un trajet (P) que doit parcourir la machine de récolte, et sur laquelle poussent les produits à récolter, et qui reçoit les signaux (76r) réfléchis par la surface (77) et transmet à la commande (66) un signal de commande, basé sur les signaux (76r) reçus, pour le réglage du mécanisme de coupe (16), la commande (66), à l'appui du signal de commande, commandant le dispositif de réglage de telle sorte que le mécanisme de coupe (16) prend une position sensiblement constante par rapport au sol, **caractérisé en ce que** la commande (66) est destinée à inciter le dispositif de réglage à régler le mécanisme de coupe (16) avant qu'il n'atteigne la surface (77) par laquelle le signal est réfléchi.

2. Système selon la revendication 1, **caractérisé en ce que** le dispositif émetteur et récepteur (74) enregistre un contour du sol le long d'une direction orientée transversalement au sens de déplacement du véhicule.

3. Système (70) selon la revendication 1 ou 2, **caractérisé en ce que** le dispositif émetteur et récepteur (74) est agencé, en particulier sur la machine de récolte, à distance du mécanisme de coupe (16) et indépendamment des variations de position du mécanisme de coupe (16).

4. Système selon l'une quelconque des revendications précédentes, **caractérisé en ce que** le dispositif de réglage comporte un système de levage (60) et/ou un système d'inclinaison (61), et **en ce que** la commande (66) active le dispositif de réglage de telle sorte que la hauteur et/ou l'inclinaison du mécanisme de coupe (16) restent dans une position sensiblement constante par rapport au sol.

5. Système (70) selon la revendication 4, **caractérisé en ce que** la commande (66) est destinée à détecter une variation de la distance entre le dispositif émetteur et récepteur (74) et la surface (77) et à induire un abaissement d'au moins une partie du mécanisme de coupe (16), lorsque la variation de distance détectée signale une augmentation de la distance par rapport à la surface (77) que doit traverser la partie concernée du mécanisme de coupe (16), et à induire un relèvement d'au moins une partie du mécanisme de coupe (16), lorsque la variation de distance détectée signale une diminution de la distance par rapport à la surface (77) que doit traverser la partie concernée du mécanisme de coupe (16).

6. Système (70) selon l'une quelconque des revendications 1 à 5, **caractérisé en ce que** le dispositif émetteur et récepteur (74) est destiné à émettre des signaux qui passent à travers les produits à récolter, de telle sorte que la commande (66) est apte à détecter le contour du sol.

7. Système (70) selon l'une quelconque des revendications 1 à 5, **caractérisé en ce que** le dispositif émetteur et récepteur (74) est destiné à enregistrer des signaux réfléchis par le côté supérieur des produits à récolter.

8. Système (70) selon la revendication 7, **caractérisé en ce que** la commande (66) est destinée à déduire le contour du sol à partir des signaux réfléchis par le côté supérieur des produits à récolter, en particulier en prenant en compte un bord des produits à récolter.

9. Système (70) selon la revendication 7 ou 8, **caractérisé en ce que** la commande (66) est destinée à positionner le mécanisme de coupe (16) à une hauteur de travail qui se situe à l'intérieur d'un domaine de distances prédéfini en dessous du côté supérieur des produits à récolter.

10. Système (70) selon l'une quelconque des revendications précédentes, **caractérisé en ce que** la commande (66) est destinée à détecter le contour du sol sur lequel s'appuie un ensemble de roues (13) de la machine de récolte, lorsque le mécanisme de coupe (16) a atteint la surface (77) qui a réfléchi le signal (76t), et à activer en conséquence le dispositif de réglage.

11. Système (70) selon l'une quelconque des revendications précédentes, **caractérisé en ce que** le dispositif émetteur et récepteur (74) est destiné à émettre des signaux sur une surface (77) et à recevoir des signaux de ladite surface, qui a une largeur qui correspond sensiblement à la largeur du mécanisme de coupe (16).

12. Système (70) selon l'une quelconque des revendications 1 à 11, **caractérisé en ce que** la commande (66) met à disposition un historique du contour de surface du sol devant le mécanisme de coupe (16) et compense le décalage de temps entre la mesure du contour de la surface du sol et l'impact du mécanisme de coupe (16) sur la surface (77).

13. Système (70) selon l'une quelconque des revendications 1 à 12, **caractérisé en ce qu'**un transpondeur (64) est couplé entre le mécanisme de coupe (16) et la machine de récolte et met à disposition un signal définissant la hauteur du mécanisme de coupe et/ou un signal définissant l'inclinaison du mécanisme de coupe, lequel signal est pris en compte par la commande (66).

14. Système (70) selon l'une quelconque des revendications 2 à 13, **caractérisé en ce que** le dispositif émetteur et récepteur (74) balaye la surface (77) transversalement au sens de déplacement du véhicule et a un angle de balayage qui est nettement plus petit que la zone angulaire nécessaire pour balayer la largeur du mécanisme de coupe (16), et **en ce que** le dispositif émetteur et récepteur (74) est agencé sur une structure rotative qui est destinée à faire tourner le dispositif émetteur et récepteur (74) de manière à pouvoir balayer toute la largeur du mécanisme de coupe (16).

15. Système (70) selon l'une quelconque des revendications 1 à 14, **caractérisé en ce que** le dispositif émetteur et récepteur (74) est conçu pour détecter un bord des produits à récolter, dont le signal du bord des produits est acheminé de préférence vers un dispositif de direction de la machine de récolte.

16. Système (70) selon la revendication 15, **caractérisé en ce que** la structure rotative est actionnée pendant des intervalles de temps dans lesquels aucun signal de bord des produits à récolter n'est envoyé vers le dispositif direction.
